Europäisches Patentamt

European Patent Office

Office européen des brevets

(19)

(11) Numéro de publication: **0 081 160**
**B1**

# (12) FASCICULE DE BREVET EUROPEEN

(45) Date de publication du fascicule du brevet:
**30.03.88**

(51) Int. Cl.⁴: **F 16 H 57/02**

(21) Numéro de dépôt: **82110937.8**

(22) Date de dépôt: **26.11.82**

(54) Dispositif permettant de prolonger l'arbre secondaire d'une boîte de vitesses d'un véhicule automobile.

(30) Priorité: **01.12.81 FR 8122517**

(43) Date de publication de la demande:
**15.06.83 Bulletin 83/24**

(45) Mention de la délivrance du brevet:
**30.03.88 Bulletin 88/13**

(84) Etats contractants désignés:
**BE CH DE IT LI NL**

(56) Documents cités:
**DE - A - 1 750 607**
**FR - A - 2 132 989**
**FR - A - 2 294 875**
**FR - A - 2 471 878**

(73) Titulaire: **Voisin, Marc Joseph, Les Vernes Livet,**
**F-38200 Vizille (FR)**

(72) Inventeur: **Voisin, Marc Joseph, Les Vernes Livet,**
**F-38200 Vizille (FR)**

(74) Mandataire: **Casalonga, Axel, BUREAU D.A.**
**CASALONGA - JOSSE Morassistrasse 8,**
**D-8000 Munich 5 (DE)**

ACTORUM AG

## Description

La présente invention concerne un dispositif permettant de prolonger un arbre d'une boîte de vitesses d'un véhicule automobile afin de disposer à l'extérieur de cette boîte de vitesses une prise de force supplémentaire en vue de transformer un véhicule à deux roues motrices en un véhicule à quatre roues motrices.

On connaît actuellement des véhicules tous terrains présentant quatre roues motrices. Cependant, ces véhicules sont équipés initialement d'une transmission prévue à cet effet.

En particulier, le document DE-A-1 750 607 montre comme indiqué dans le préambule de la revendication 1 une boîte de transmission qui comprend un carter, un premier arbre relié à un arbre de la boîte de vitesses et un second arbre relié à un second pont du véhicule ces premier et second arbres étant alignés et étant succeptible d'être reliés de manière amovible par l'intermédiaire d'une liaison à crabot.

La présente invention propose une autre solution.

Conformément à la présente invention ledit élément est un carter auxiliaire qui est tubulaire sensiblement concentriquement audit arbre secondaire et présente une paroi d'extrémité radiale venant en appui sur la face d'extrémité du carter de la boîte de vitesses et des espaces intérieurs pour les extrémités des arbres ou des axes de ladite boîte de vitesses s'étendant au-delà de ladite face d'extrémité du carter de boîte de vitesses et pour lesdits moyens de commande et ledit manchon présente, à la suite de sa portion cannelée intérieurement, un alésage de diamètre supérieur délimitant un épaulement intérieur destiné à servir d'appui à un écrou de maintien dudit manchon, cet écrou de maintien étant monté sur une extrémité filetée dudit arbre secondaire.

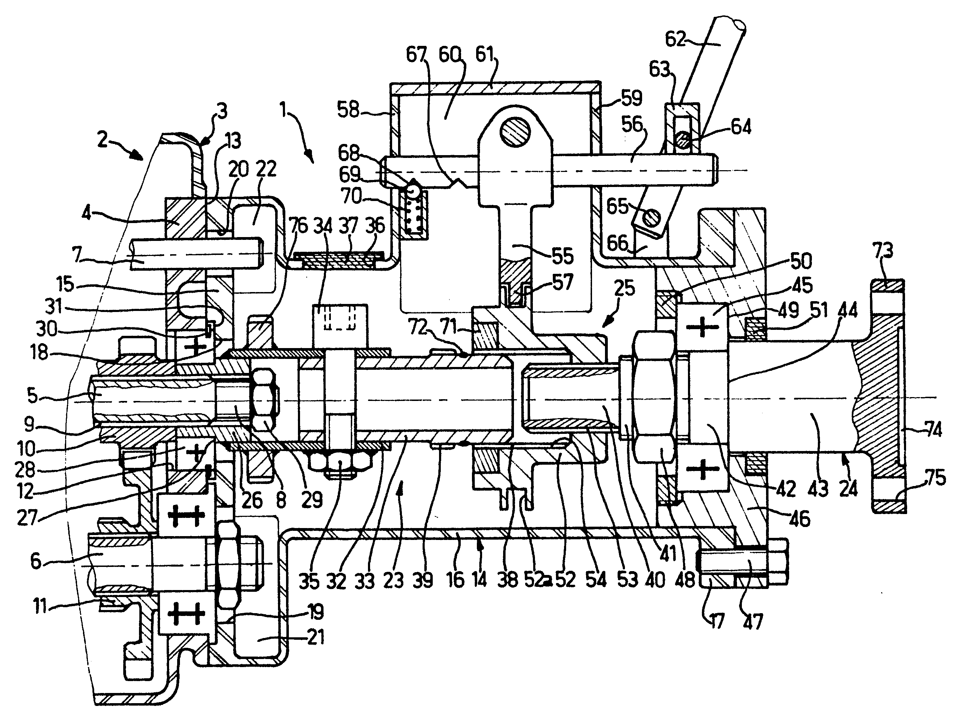

D'autres caractéristiques de la présente invention apparaîteront à l'étude d'un dispositif particulier prolongeant une boîte de vitesses particulière en vue de disposer à l'extérieur de cette dernière de l'énergie disponible sur son arbre secondaire, ce dispositif étant décrit à titre d'exemple non limitatif et illustré par le dessin sur lequel:

– la figure unique représente une coupe axiale de ce dispositif.

Le dispositif repéré d'une manière générale par la référence 1 est prévu pour être adapté sur une boîte de vitesses repérée d'une manière générale par la référence 2 et représentée partiellement.

La boîte de vitesses 2 comprend un carter 3 qui présente une paroi d'extrémité radiale 4. La boîte de vitesses 2 comprend un arbre secondaire 5, un arbre intermédiaire 6 et un axe de commande 7 portant des fourchettes non visibles sur la figure. L'arbre secondaire, l'arbre intermédiaire et l'axe de commande traversent et s'étendent au-delà de la paroi d'extrémité radiale 4.

L'arbre secondaire 5 présente à partir de son extrémité extérieure une portion (extrémité) filetée 8 et une portion cannelée (cannelures extérieures) 9 qui reçoit un pignon denté 10 en prise avec un pignon denté 11 monté sur l'arbre intermédiaire 6, le pignon 10 étant monté sur la portion cannelée 9 en laissant subsister la partie d'extrémité de cette portion cannelée 9 libre.

Initialement, dans la boîte de vitesses de ce type, un roulement à billes est disposé autour de cette partie d'extrémité libre de la portion cannelée 9 et à l'intérieur d'un alésage 12 de la paroi d'extrémité 4 du carter 3, la bague intérieure de ce roulement étant placée entre le pignon 10 et un écrou monté sur l'extrémité filetée 8 de l'arbre secondaire 5. Un couvercle est monté sur la paroi d'extrémité 4 en prenant appui sur sa face extérieure radiale 13, couvercle qui présente des évidements destinés à recevoir les extrémités dépassantes de l'arbre secondaire 5, de l'arbre intermédiaire 6 et de l'axe de commande 7.

Dans le but d'adapter le dispositif 1, ledit couvercle, ledit roulement et ledit écrou ont été démontés et le dispositif 1 peut s'adapter sur la boîte de vitesses 2 ainsi formée sans avoir besoin d'en modifier l'un de ses éléments restants.

Le dispositif 1 comprend un carter auxiliaire 14 prolongeant le carter 3 de la boîte de vitesses 2. Ce carter auxiliaire 14 présente une partie radiale 15 en appui sur la face 13 de la paroi radiale 4 du carter de boîte de vitesses 3 et une portion cylindrique 16 qui s'étend à partir de sa partie radiale 15 et qui est ouverte à son extrémité extérieure 17 opposée à la partie radiale 15.

La partie radiale 15 présente des ouvertures 18, 19 et 20, respectivement pour le passage de l'arbre secondaire 5, de l'arbre intermédiaire 6 et de l'axe de commande 7. En outre, le carter 14 présente des espaces intérieurs 21 et 22 dans lesquels s'étendent respectivement l'extrémité de l'arbre intermédiaire 6 et l'extrémité de l'axe de commande 7.

Le dispositif 1 comprend, en alignement avec l'arbre secondaire 5 de la boîte de vitesses, un manchon repéré d'une manière générale par la référence 23 solidaire en rotation de l'arbre secondaire 5, un arbre de sortie 24 qui s'étend au travers de l'ouverture d'extrémité de la paroi tubulaire 16 du carter auxiliaire 14 et un des moyens de liaison en rotation amovible repéré d'une manière générale par la référence 25 et susceptible d'effectuer une liaison mécanique amovible entre le manchon 23 et l'arbre de sortie 24.

Dans l'exemple représenté, le manchon 23 comprend une bague 26 cannelée intérieurement de manière à être en prise avec la partie d'extrémité libre de la cannelure 9 de l'arbre secondaire 5.

La bague 26 présente un épaulement extérieur radial 27 tourné du côté du pignon 10 monté sur l'arbre secondaire 5. Entre l'épaulement 27 et le pignon 10 est disposé un roulement par exemple à billes 28 dont la bague intérieure est disposée autour de la bague cannelée 26 et dont la bague extérieure est disposée dans l'alésage 12 de la paroi d'extrémité 4 du carter 3 de la boîte de vitesses 2. On notera que ce roulement 28 est destiné à remplacer le roulement d'origine mentionné plus haut et présente par rapport à ce dernier un diamètre intérieur plus grand.

En vue du montage du roulement 28 et du maintien de la bague 26, un écrou 29 est monté sur l'extrémité filetée 8 de l'arbre secondaire 5 et prend appui sur la face radiale de la bague 26 opposée au pignon 10. La bague extérieure du roulement 28 présente une gorge extérieure annulaire dans laquelle est disposé un circlips 30 qui prend appui sur la face 13 de la paroi radiale 4 du carter 3 de la boîte de vitesses 2, la partie radiale 15 du carter auxiliaire 14 présentant, autour de son ouverture axial 18 un évidement annulaire 31 dont la face radiale est en appui sur la face radiale de la bague extérieure du roulement 28 situé du côté du circlips 30.

Le manchon 23 comprend également un tube axial 32 qui est emmanché sur la partie de grand diamètre de la bague 26 et qui lui est fixé par exemple par soudage, le diamètre intérieur de ce tube 32 devant être, dans l'exemple représenté, suffisant pour le passage d'une clé destinée à la manœuvre de l'écrou 29.

Le manchon 23 comprend également un axe creux 33 dont l'une des extrémités est emmanchée à l'intérieur du tube 32 et y est fixé par l'intermédiaire d'une vis radiale 34 qui traverse radialement le tube 32 et l'axe creux 33 pour se visser dans un écrou 35 fixé sur la paroi extérieure du tube 32 par exemple par soudage.

L'axe creux 33 est prévu démontable de manière à permettre le montage de la bague 26 sur l'arbre secondaire 5 et la manœuvre de l'écrou de maintien 29. Pour le montage de la vis 34 à l'intérieur du carter auxiliaire 14, la partie tubulaire 16 de ce carter 14 comprend dans sa partie supérieure un orifice 36 de dimension suffisante pour le passage et la manœuvre de la vis 34, cet orifice 36 étant obturée par exemple par un bouchon 37 en matière plastique ou en caoutchouc.

L'axe creux 33 comprend, à l'extérieur du tube 32 et du côté de l'arbre de sortie 24, une partie d'extrémité cylindrique 38 et des cannelures extérieures 39.

A partir de son extrémité située du côté du manchon 23, l'arbre de sortie 24 comprend une portion cannelée extérieurement 40, une portion filetée 41, une portion cylindrique 42, une portion cylindrique 43 séparée de la portion cylindrique 42 par un épaulement 44 tourné du côté du manchon 23. L'arbre de sortie 24 est porté par un roulement 45 qui est monté dans l'extrémité 17 du carter auxiliaire 14 par l'intermédiaire d'un couvercle 46 qui est fixé sur la partie d'extrémité 17 du carter auxiliaire 14 par l'intermédiaire de vis axiales régulièrement réparties 47. La bague intérieure du roulement 45 est montée sur la partie cylindrique 42 de l'arbre de sortie 24 et est maintenue en appui contre l'épaulement 44 par l'intermédiaire d'un écrou 48 fixé sur la partie filetée 41. La bague extérieure du roulement 45 est maintenue à l'intérieur d'un évidement intérieur 49 par un écrou fileté extérieurement 50 qui est vissé dans un filetage intérieur de l'évidement 49.

En outre, le couvercle 46 porte dans un évidement annulaire intérieur un joint d'étanchéité 51 qui prend appui sur la partie cylindrique 43 de l'arbre de sortie 24.

Les moyens de liaison amovibles 25 forment, dans l'exemple représenté, un système de crabotage. Ils comprennent un baladeur 52 qui présente des premières cannelures intérieures 53 qui sont en prise avec les cannelures de la partie 40 de l'arbre de sortie 24 et des deuxièmes cannelures 54 qui sont destinées à venir en prise avec les cannelures 39 de l'axe creux 33 du manchon 23. En vue du mouvement axial du baladeur 52, il est prévu une fourchette 55 qui est fixée sur un axe de commande 56 qui est parallèle à l'arbre secondaire 5 et qui est mobile axialement, la fourchette 55 présentant un épaulement intérieur 57 qui pénètre à l'intérieur d'une gorge périphérique annulaire 52a du baladeur 52 en vue d'une liaison mécanique entre la fourchette 55 et le baladeur 52. L'axe de commande 56 est porté par deux cloisons radiales 58 et 59 du carter 14 qui s'étendent à partir de la partie tubulaire de ce dernier, deux autres cloisons étant prévues et ces cloisons délimitant un espace intérieur 60 dont l'ouverture extérieure est obturée par un couvercle 61 fixé par exemple par des vis non représentées.

L'une des extrémités de l'axe de commande 56 se prolonge largement au-delà de la cloison radiale 59 et est reliée en vue de son déplacement axial à un levier de commande 62 par l'intermédiaire d'une chape 63 fixé à l'axe de commande 56 et d'un axe 64 fixé au levier 62, ce levier 62 étant par ailleurs articulé autour d'un axe 65 porté par une chape 66 prévue sur la partie tubulaire 16 du carter auxiliaire 14.

En manœuvrant le levier 62, on peut faire déplacer le baladeur 52 entre une position débrayée et une position embrayée. Dans la position débrayée, les cannelures 54 du baladeur 52 sont dégagées des cannelures 39 de l'axe creux 33 et sont autour de la partie cylindrique d'extrémité 38 de l'axe creux 33. Dans sa position embraillée, les cannelures 54 du baladeur 52 sont en prise avec les cannelures 39 de l'axe creux 33 et la liaison entre l'arbre secondaire 5 de la boîte de vitesses 2 et l'arbre de sortie 24 est établie. Pour maintenir le baladeur 52 dans l'une de ces positions, il est prévu sur l'axe de commande 56 deux encoches 67 et 68 qui sont destinées à recevoir une bille de maintien 69 maintenue en appui sur la paroi extérieure de l'axe de commande 56 par l'intermédiaire d'un ressort 70.

De manière à faciliter l'enclenchement du baladeur 52, on a prévu un système de synchronisation comprenant, de manière connue, un synchroniseur 71 par exemple à bagues coniques, non représentées sur la figure, disposé dans un évidement intérieur du baladeur 56 et un anneau 72, de préférence métallique, disposé autour de la partie cylindrique 38 de l'axe creux 33 du côté des cannelures 39.

Au-delà du couvercle 46 et donc à l'extérieur du carter auxiliaire 14, l'arbre de sortie 24 comprend un plateau 73 qui présente un évidement radial 74 et des orifices axiaux régulièrement répartis 75 en vue d'être assemblé à un plateau équivalent monté à l'extrémité d'un arbre de transmission non visibles sur la figure. Un autre moyen de liaison pourrait être prévu et notamment un joint de cardan.

Comme la boîte de vitesses 2 comprend initialement un tachymètre monté à l'extrémité de l'arbre secondaire, on a prévu un pignon 76 fixé au manchon 23 autour de son tube 32 du côté de la paroi d'extrémité 15 du carter auxiliaire 14, une vis de tachimètre non visible sur la figure étant normalement montée sur le carter auxiliaire 14.

Tel qu'il vient d'être décrit, le dispositif 1 constitue un moyen qui permet de disposer sur son arbre de sortie 24 de l'énergie disponible sur l'arbre secondaire 5 de la boîte de vitesses 2, la liaison mécanique entre l'arbre secondaire 5 de la boîte de vitesses 2 et l'arbre de sortie 24 du dispositif 1 étant amovible grâce au baladeur 52 qui peut être aisément commandé de l'extérieur par l'intermédiaire du levier 62, l'enclanchement du baladeur 52 étant en outre faciliter par le système de synchronisation 71, 72.

Dans une utilisation particulièrement intéressante du dispositif 1, on peut relier l'arbre de sortie 24 aux roues initialement non motrices du véhicule portant la boîte de vitesses 2 de manière à transformer ce véhicule en un véhicule à quatres roues motrices, l'utilisateur du véhicule pouvant à volonté transformer son véhicule en un véhicule soit à deux roues motrices soit à quatre roues motrices simplement en actionnant le levier 62 sans qu'il ait besoin d'arrêter complètement son véhicule compte tenu du fait que l'enclenchement du baladeur 52 se fait avec synchronisation.

La présente invention ne se limite pas à l'exemple ci-dessus décrit. On peut en effet relier le manchon à un autre arbre de la boîte de vitesses. Cependant, dans l'application ci-dessus, le manchon sera de préférence relié à un arbre dont la vitesse est en permanence proportionnelle à la vitesse du véhicule. On peut également prévoir entre le manchon et l'arbre de sortie du dispositif des moyens de liaison en rotation comprenant une transmission à engrenages en vue par exemple d'une démultiplication.

D'autres variantes de réalisation et d'utilisation du dispositif selon la présente invention sont également possibles, et en particulier un montage de ce dispositif sur une boîte de vitesses d'un autre type, sans sortir du cadre de la présente invention.

## Revendications

1. Dispositif permettant de disposer à l'extérieur d'une boîte de vitesses d'un véhicule automobile d'une prise de force supplémentaire en vue de transformer un véhicule à deux roues motrices en un véhicule à quatre roues motrices, du type comprenant un élément faisant office de carter (14) se fixant sur le carter (3) de la boîte de vitesses, et, montés dans cet élément, un arbre de sortie (24) qui s'étend au travers de l'élément et qui constitue ladite prise de force, un manchon (23) présentant des cannelures intérieures et des moyens de liaison en rotation amovibles (25) qui sont commandables de l'extérieur et qui sont susceptibles d'effectuer une liaison mécanique entre ledit manchon (23) et ledit arbre de sortie (24), ledit élément (14) étant monté sur le carter de la boîte de vitesses de telle sorte que ledit manchon (23) est en alignement avec un arbre secondaire (5) de la boîte de vitesses et les cannelures intérieures dudit manchon (23) étant en prise avec des cannelures extérieures (9) dudit arbre secondaire (5) prévues à son extrémité, ledit arbre de sortie (24) et ledit manchon (23) étant alignés, les extrémités voisines dudit manchon (23) et dudit arbre de sortie (24) étant cannelées, un baladeur (52) cannelé intérieurement et mobile axialement grâce à une fourchette (55) étant relié à des moyens de commande effectuant une liaison amovible entre ledit manchon et ledit arbre de sortie, l'extrémité extérieure dudit arbre de sortie portant des moyens de liaison avec un autre arbre de transmission extérieur, caractérisé par le fait que ledit élément est un carter auxiliaire qui est tubulaire (16) sensiblement concentriquement audit arbre secondaire et présente une paroi d'extrémité radiale (15) venant en appui sur la face d'extrémité du carter de la boîte de vitesses et des espaces intérieurs (21, 22, 60) pour les extrémités des arbres ou des axes de ladite boîte de vitesses s'étendant au-delà de ladite face d'extrémité du carter de boîte de vitesses et pour lesdits moyens de commande et ledit manchon (23) présente, à la suite de sa portion cannelée intérieurement, un alésage de diamètre supérieur délimitant un épaulement intérieur destiné à servir d'appui à un écrou de maintien (29) dudit manchon, cet écrou de maintien étant monté sur une extrémité filetée (8) dudit arbre secondaire.

2. Dispositif selon la revendication 1, caractérisé par le fait qu'il comprend un roulement (28) monté autour de l'extrémité dudit manchon et à l'intérieur d'un alésage du carter de la boîte de vitesses et portant ainsi les extrémités dudit arbre secondaire (5) et dudit manchon (23).

3. Dispositif selon l'une quelconque des revendications précédentes, caractérisé par le fait que ledit manchon porte un pignon (76) qui est en prise avec une vis de tachymètre montée dans ledit carter auxiliaire.

4. Dispositif selon l'une quelconque des revendications précédentes, caractérisé par le fait que ladite fourchette (55) est montée sur un axe de commande (56) reliée à un levier (62) s'étendant à l'intérieur dudit carter auxiliaire (16), des moyens synchronisateurs (71, 72) étant prévus en vue de faciliter l'enclenchement dudit baladeur (52).

5. Dispositif selon l'une quelconque des revendications précédentes, caractérisé par le fait que ledit arbre de sortie (24) est monté dans ledit carter auxiliaire par l'intermédiaire d'un roulement (45) et d'un couvercle d'extrémité (46) fixé audit carter auxiliaire, un joint d'étanchéité (51) étant prévu entre ledit couvercle et ledit arbre de sortie.

6. Dispositif selon l'une quelconque des revendications précédentes, caractérisé par le fait que ledit manchon (23) est formé par une bague (26) cannelée intérieurement, un tube (32) emmanché sur cette bague et fixé à cette dernière et un axe (33) emmanché sur ou dans ce tube et fixé à ce dernier par l'intermédiaire d'une vis radiale, l'autre extrémité de cet axe étant reliable audit arbre de sortie.

## Claims

1. Device permitting the disposal, outside a gear box of an automotive vehicle, of an additional power take-off, with the object of transforming a two-wheel drive vehicle into a four-wheel drive vehicle, of the type comprising an element acting as a housing (14) attached to the housing (3) of the gear box and, monted in this element, an output shaft (24) which passes through the element and which constitutes the said power take-off, a sleeve (23) having internal splines and means of connection (25) which are moveable in rotation, which can be controlled from the outside and which are capable of effecting a mechanical connection between the said sleeve (23) and the said output shaft (24), the said element (14) being mounted on the housing of the gear box in such a manner that the said sleeve (23) is in alignment with a secondary shaft (5) of the gear box, and the internal splines of the said sleeve (23) being engaged with external splines (9) of the said secondary shaft (5), these splines being provided at the end of the said shaft (5), the said output shaft (24) and the said sleeve (23) being aligned, the adjacent ends of the said sleeve (23) and of the said output shaft (24) being splined, a sliding gear (52) which is internally splined and axially moveable owing to the fact that a fork (55) is connected to control means effecting a moveable connection between the said sleeve and the said output shaft, the external end of the said output shaft bearing means of connection to another external transmission shaft, characterized in that the said element is an auxiliary housing (16) which is tubular substantially concentric with the said secondary shaft and which has a wall of radial end (15), which boers on the end face of the housing of the gear box, and internal spaces (21, 22, 60) for the ends of the shafts or the axes of the said gear box extending beyond the said end face of the housing of the gear box and for the said control means, and the said sleeve (23) has, followed by its internally slined portion, a bore of greater diameter defining an internal shoulder intended to serve as a support for a holding nut (29) of the said sleeve, this holding nut being mounted on a threaded end (8) of the said secondary shaft.

2. Device according to Claim 1, characterized in that it comprises a bearing (28) mounted around the end of the said sleeve and inside a bore of the housing of the gear box, and thus bearing the ends of the said secondary shaft (5) and of the said sleeve (23).

3. Device according to either of the preceding claims, characterized in that the said sleeve bears a gear wheel (76) which is engaged with a tachometer screw mounted in the said auxiliary housing.

4. Device according to any one of the preceding claims, characterized in that the said fork (55) is mounted on a gear shift shaft (56) connected to a lever (62) extending inside the said auxiliary housing (16), synchronizing means (71, 72) being provided in order to facilitate the engagement of the said sliding gear (52).

5. Device according to any one of the preceding claims, characterized in that the said output shaft (24) is mounted in the said auxiliary housing by means of a bearing (45) and an end cover (46) fixed to the said auxiliary housing, a sealing joint (51) being provided between the said cover and the said output shaft.

6. Device according to any one of the preceding claims, characterized in that the said sleeve (23) is formed by an internally splined ring (26), a tube (32) fitted onto this ring and fixed to the latter and a pin (33) fitted onto or into this tube and fixed to the latter by means of a radial screw, the other end of this pin being connectable to the sait output shaft.

## Patentansprüche

1. Vorrichtung zum Anordnen einer zusätzlichen Zapfwelle ausserhalb des Schaltgetriebes eines Kraftfahrzeuges, um ein Zweiradantriebsfahrzeug in ein Vierradantriebsfahrzeug umzuwandeln, der Art, die aus einem als Gehäuse (14) dienenden, am Getriebegehäuse (3) befestigten Element, einer darin angebrachten Antriebswelle (24), die sich durch dieses erstreckt und besagte Zapfwelle darstellt, einer Hülse (23) mit Innenkeilen und drehbeweglichen Verbindungsmitteln (25), die von aussen steuerbar sind und eine Verbindung zwischen besagter Hülse (23) und besagter Abtriebswelle (24) herstellen können, wobei jenes Element (14) so auf dem Getriebsgehäuse angebracht ist, dass jene Hülse (23) mit einer Vorgelegewelle (5) des Getriebes ausgerichtet ist und die Innenkeile besagter Hülse (23) mit Aussenkeilen (9) am Ende dieser Vorgelegewelle (5) in Eingriff stehen, wobei jene Abtriebswelle (24) und jene Hülse (23) miteinander ausgerichtet und an ihren benachbarten Enden mit Keilen versehen sind, und wobei ein mit Innenkeilen versehenes und mittels einer Gabel (55) axial bewegliches Schieberad (52) mit Steuermitteln verbunden ist, welche eine Verbindung zwischen besagter Hülse und besagter Abtriebswelle bewirken, wobei das äussere Ende jener Abtriebswelle Verbindungsmittel zu einer weiteren aussenliegenden Transmissionswelle trägt, dadurch gekennzeichnet, dass besagtes Element ein rohrförmiges, mit jener Vorgelegewelle im wesentlichen konzentrisches Hilsgehäuse (16) ist und eine radiale Endwand (15), die sich auf der Aussenseite des Getriebegehäuses abstützt, und Innenräume (21, 22, 60) für die sich über besagte Aussenseite des Getriebegehäuses hinaus erstreckenden Wellen- bzw. Achsenenden dieses Getriebes aufweist und besagte Hülse (23) nach ihrem mit Innenkeilen versehenen Teil eine Bohrung grösseren Durchmessers besitzt, die eine Innenschulter zur Abstützung einer Haltemutter (29) für jene Hülse begrenzt, wobei diese Haltemutter auf einem mit Gewinde versehenen Ende (8) jener Vorgelegewelle angebracht ist.

2. Vorrichtung nach Anspruch 1, dadurch gekennzeichnet, dass sie ein um das Ende jener Hülse herum und im Inneren einer Bohrung im Getriebegehäuse angebrachtes Lager (28) enthält und somit die Enden jener Vorgelegewelle (5) und jener Hülse (23) abstützt.

3. Vorrichtung nach einem der vorhergehenden Ansprüche, dadurch gekennzeichnet, dass jene Hülse ein Ritzel (76) trägt, an dem eine in besagtem Hilfsgehäuse angebrachte Tachometerschraube angreift.

4. Vorrichtung nach einem der vorhergehenden Ansprüche, dadurch gekennzeichnet, dass jene Gabel (55) an einem mit einer sich im Innern jenes Hilfsgehäuses (16) erstreckenden Stange (62) verbundenen Schalthebel (56) angebracht ist, wobei Synchronisiereinrichtungen (71, 72) vorgesehen sind, um den Eingriff besagten Schieberads (52) zu erleichtern.

5. Vorrichtung nach einem der vorhergehenden Ansprüche, dadurch gekennzeichnet, dass jene Abtriebswelle (24) mittels eines Lagers (45) und einer in besagtem Hilfsgehäuse angebrachten Endabdeckung (46) in diesem gelagert ist, wobei zwischen dieser Abdeckung und jener Abtriebswelle eine Dichtung (51) vorgesehen ist.

6. Vorrichtung nach einem der vorhergehenden Ansprüche, dadurch gekennzeichnet, dass besagte Hülse (23) durch einen mit Innenkeilen versehenen Ring (26), ein darauf aufgezogenes Rohr (32) und einen auf bzw. in dieses auf- bzw. eingezogenen, daran mittels einer Radialschraube befestigten Stift (33) gebildet wird, dessen anderes Ende mit jener Abtriebswelle verbindbar ist.